Europäisches Patentamt

European Patent Office

Office européen des brevets

(11) Publication number: **0 312 214 B1**

(12) **EUROPEAN PATENT SPECIFICATION**

(45) Date of publication of patent specification: **12.08.92**　(51) Int. Cl.5: **G11B 20/10**, //G11B11/10

(21) Application number: **88308755.3**

(22) Date of filing: **21.09.88**

(54) **Digital signal reproduction apparatus.**

(30) Priority: **21.09.87 JP 236757/87**
**27.10.87 JP 270607/87**

(43) Date of publication of application:
**19.04.89 Bulletin 89/16**

(45) Publication of the grant of the patent:
**12.08.92 Bulletin 92/33**

(84) Designated Contracting States:
**DE FR GB IT NL**

(56) References cited:
**EP-A- 0 220 023**
**DE-A- 3 604 723**
**DE-B- 1 259 379**
**US-A- 4 764 916**

PATENT ABSTRACTS OF JAPAN, vol. 11, no.
186 (P-586)[2633], 16th June 1987; & JP-A-62
12 924 (NEC CORP.) 21-01-1987

PATENT ABSTRACTS OF JAPAN, vol. 11, no.
151 (P-576)[2598], 16th May 1987; & JP-A-61
284 876 (NEC CORP.) 15-12-1986

PATENT ABSTRACTS OF JAPAN, vol. 8, no.
192 (P-298)[1629], 4th September 1984; & JP-
A-59 79 409 (SONY K.K.) 08-05-1984

(73) Proprietor: **SHARP KABUSHIKI KAISHA**
**22-22 Nagaike-cho Abeno-ku**
**Osaka 545(JP)**

(72) Inventor: **Fuji, Hiroshi**
**3-1-30-206, Kataokadai Kanmaki-cho**
**Kitakatsuragi-gun Nara-shi(JP)**
Inventor: **Yamaguchi, Takeshi**
**Green Haitsu Wakakusa 202 4,**
**Higashikanenagacho**
**Nara-shi Nara(JP)**
Inventor: **Deguchi, Toshihisa**
**2-200-5, Daiya-haitsu Gakuenmae Gakuen**
**Daiwa-cho**
**Nara-shi Nara(JP)**
Inventor: **Kojima, Kunio**
**2-7-8-305, Shibatsuji-cho**
**Nara-shi Nara(JP)**
Inventor: **Terashima, Shigeo**
**95-86, Nikaidou Kaminosyou-cho**
**Tenri-shi, Nara(JP)**
Inventor: **Fujiwara, Tsuneo**
**2613-1, Ichinomoto-cho**
**Tenri-shi, Nara(JP)**

(74) Representative: **Brown, Kenneth Richard et al**
**R.G.C. Jenkins & Co. 26 Caxton Street**
**London SW1H 0RJ(GB)**

Rank Xerox (UK) Business Services

1       **EP 0 312 214 B1**       2

## Description

The present invention relates to a digital signal reproduction apparatus for reproducing digital signals recorded on a recording medium such as a magnetooptical disc.

A magneto-optical disc has a magnetic thin film on its surface as a recording medium with magnetic anisotropy such that the axis of easy magnetization is oriented perpendicularly to the surface of the film. Data is recorded or reproduced onto or from the magnetic thin film by irradiating it with a laser beam condensed into a diameter of about 1 m.

To record data signals, a strong laser beam is irradiated onto the thin film. This raises the temperature of the irradiated spot locally to decrease the coercive force in the vicinity. Accordingly, when a reverse biased magnetic field is applied to the spot, from outside the magnetization of the spot is inverted. Accordingly, if the strength of the laser beam or the direction of the biased magnetic field is controlled according to the data signals to be recorded, data is recorded onto the thin film as dots having the diameter of the laser beam.

A substantially similar method is employed to erase the recorded signals.

To reproduce recorded data signals the magnetic thin film is irradiated with a weaker laser beam than the recording beam. The laser beam irradiating spot on the film is linearly polarized with a polarization plane inclined according to the magnetized state of the spot by the magneto-optical effect (Faraday effect or Kerr effect) and is reflected from the surface of the film. The recorded data signal can be reproduced by detecting the inclination of the polarization plane by converting it into an electrical signal by an optical detector through an analyzer.

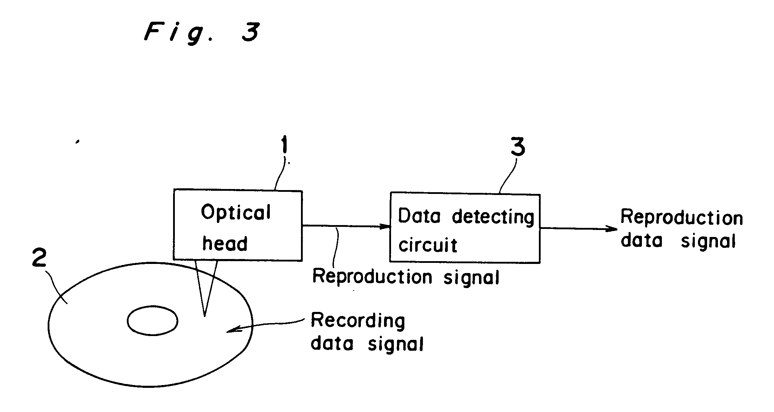

Fig. 3 is a schematic diagram of the reproduction system for the magneto-optical disc.

When a laser beam generated by an optical head 1 irradiates the thin film of the magneto-optical disc 2, the beam is reflected toward the optical head 1 and converted into a reproduction signal corresponding to the inclination of the polarization plane. The reproduction signal is transmitted to a data detecting circuit 3 and the recorded data signal is output as a reproduction data signal.

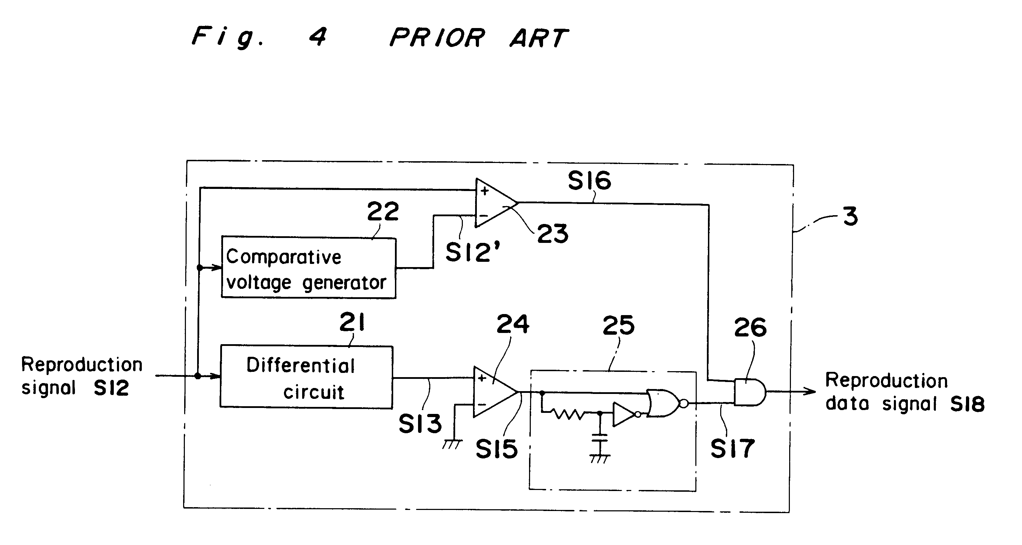

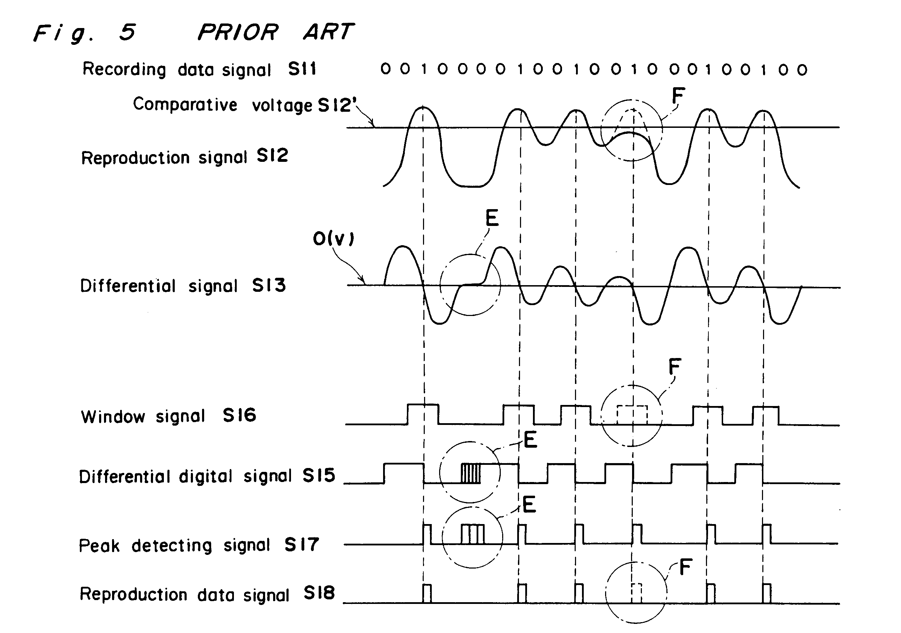

The conventional data detecting circuit 3 used for the above reproduction system will be described referring to Figs. 4 and 5. As shown in the uppermost row of Fig. 5, if a recording data signal S11 comprising a series of "0's" and "1's" is recorded on the thin film of the magneto-optical disc, the reproduction signal S12 generated from the recording data signal S11 has a wave form in which each peak corresponds to a "1" of the recording data signal S11. The reproduction signal S12 is input respectively to a differential circuit 21, a comparative voltage generating circuit 22, and a comparator 23 of the data detection circuit 3, as shown in Fig. 4. The differential circuit 21 differentiates the reproduction signal S12 and outputs a differential signal S13. The differential signal S13 has a wave form having zero-cross points corresponding to individual maximum and minimum values of the reproduction signal S12 as shown in Fig. 5. The differential signal S13 is input into a comparator 24. The comparator 24 compares the differential signal with a 0 V level and outputs a differential digital signal S15. The trailing edge of pulses of the differential digital signals S15 correspond to zero-cross points of the differential signal S13 as it changes from a positive value to a negative value. It therefore corresponds to each peak point (maximum point in the conventional example) of the reproduction signal S12, namely, it represents a position corresponding to "1" of the recorded recording data signal S11. Therefore, if the trailing edge is detected by a trailing edge detecting circuit 25, a peak detecting signal corresponding to "1" of the recording data signal S11 is obtained.

However, when the "0" level continues in the recording data signal S11 and, the reproduction signal S12 is held at the minimum level for an extended period, the differential signal S13 is also held at the zero-crossing level for a relatively long time as indicated by a circle E of Fig. 5. This is apt to cause noise in the differential digital signal S15 and the peak detecting signal S17. It, therefore, becomes necessary to remove noise in the peak detecting signal S17 in order to pick up only pulses representing peaks of the reproduction signal S12. In order to achieve this, the comparative voltage generating circuit 22 generates another comparative voltage S12' based on the reproduction signal S12, the comparative voltage S12' providing a threshold voltage for detecting the vicinity of each peak of the reproduction signal S12. The comparator 23 compares the reproduction signal S12 with the comparative voltage S12', and outputs a window signal S16 that provides a signal indicative of the vicinity of the peak of the reproduction signal S12. The peak detecting signal S17 and the window signal S16 are then input to an AND gate 26 the output of which masks unwanted noise found in the peak detecting signal S17.

As a result, a reproduction data signal S18 having pulse corresponding only to "1's" of the recorded signal S11 is obtained.

However, in a conventional data detecting circuit such as data detecting circuit 3, the level margin between the reproduction signal S12 and

2

the comparative voltage S12' compared at the comparator 23 is relatively low. Accordingly, when there is a fluctuation in the amplitude of the reproduction signal S12 a corresponding error may be created in the output window signal S16. Furthermore, in an optical memory apparatus such as the above-mentioned magnetooptical disc etc., the reproduction signal S12 includes low frequency components, causing the level margin to be further decreased creating a greater likelihood of error in the window signal S16. For example, when a dropout is caused in the reproduction signal S12 as indicated by a circle F of Fig. 5, the window signal S16 is not opened. As a consequence, the detecting pulse does not appear in the reproduction data signal S18 although a pulse representing the peak appears in the peak detecting signal S17.

It will be apparent from the above that that conventional data detecting circuits of the type indicated by the numeral 3 frequently generate errors in detecting a reproduction data signal S18 when there are fluctuations in the amplitude of the reproduction signal, the data signal comprises low frequency components, or when the data signal is lower than expected.

US 4,764,916 describes a reading circuit for an optical disc apparatus according to the preamble of claim 1 and another embodiment that utilises window signals generated from first and second differential signals to eliminate noise in the reproduction signal.

JP 59-79409 relates to restoration of a transmitted original signal in a field somewhat different to that of the present invention. It describes apparatus that utilises a window signal derived from first and third differentials of the input signal and a window signal derived from the second differential to restore a transmitted signal.

An object of the present invention is to alleviate at least some of the aforementioned problems.

It is another object of the present invention to provide a digital signal reproduction apparatus which can avoid various errors due to amplitude fluctuation, low frequency components and dropout contained in a reproduction signal upon reproducing it.

According to the present invention, there is provided a digital signal reproduction apparatus for reproducing a digital data signal in response to a reproduction signal reproduced from a recording medium, comprising a comparative voltage generator for generating a threshold voltage, first comparing means for comparing the reproduction signal with the threshold voltage and outputting a first window signal representing the comparison result thereof, first differential means for differentiating the reproduction signal, and outputting a first order differential signal, and peak detecting means for detecting a zero-crossing point of the first order differential signal, and outputting a peak detecting signal, **characterised in that** the comparative voltage generator is operable to generate said threshold voltage on the basis of the reproduction signal so as to have a level set to be slightly higher than the minimum level of the reproduction signal **and in that** the digital signal reproduction apparatus further comprises:

second order differential means for differentiating the first order differential signal and outputting a second order differential signal;

second comparing means for comparing the second order differential signal with a predetermined level and outputting a second window signal representing the comparison result thereof; and

gate means for gating the peak detecting signal with the first and second window signals, and outputting the reproduction digital data signal.

The comparative voltage is to detect the amplitude of the reproduction signal, and can be obtained from the direct current component by a comparative voltage generating circuit or may be obtained from a constant voltage source regulated by a power supply unit. The first comparing means provides the first window signal by comparing the reproduction signal with the comparative voltage and outputting the difference. Since the comparative voltage is used to remove noise in the peak detecting signal by generating the first window signal, a relatively large level margin can be set compared to that possible in conventional comparative voltage generating circuits.

The second window signal used for gating the peak detecting signal can be generated by a second order differential means and a second comparing means.

When the first order differential signal is differentiated by the second differential means, the second order differential signal has a wave form with maxima and minima corresponding to zero-crossing points of the first order differential signal. As the second order differential signal is a signal representative of the change in the amplitude of the first differential signal, the second differential signal is not affected to any great extent by fluctuations in amplitude or low frequency components.

The second window signal representing the zero-crossing point of the first differential signal can be obtained by comparing the second order differential signal with a predetermined value. If the peak points of the reproduction signal to be detected are maxima, the zero-crossing points at which the first order differential signal changes from positive to negative correspond to the maxima of the reproduction signal. When the predetermined value is set at a ground level, noise may be caused in the second window signal by the effect of the unstable portions of the first differential signal. However such noise is removed by ANDing with the first window signal.

Accordingly, since the first window signal is only used for removing noise which may be generated in the peak detecting signal, a relatively large level of margin can be set for the comparative voltage for the first comparing means. Noises due to amplitude fluctuation, low frequency components, and drop-out, in the reproduction signal is thereby removed. As the second window signal is generated from the second order differential signal, the second window signal is also not affected by amplitude fluctuation and low frequency components, and the pulses of the second window signal are accurately output even if there are some dropouts present in the reproduction signal. Accordingly, since the peak detecting signal is gated with the first and second window signals, noise is dependably removed and only pulses corresponding to respective peaks of the reproduction signal are passed by the gate means.

Accordingly, even if a reproduction signal reproduced from a recording medium has amplitude fluctuations low frequency components or drop-out, the correct reproduction data signal can be obtained with certainty. For example, a reproduction signal reproduced from a recording medium such as a magnetooptical disc often includes low frequency components, however, an accurate reproduction data signal can be obtained unaffected by low frequency components.

Fig. 1 is a schematic diagram of a data detecting circuit of a digital signal reproduction apparatus according to the present invention,

Fig. 2 is a timing chart showing wave forms of respective signals output from circuits of the data detecting circuit of the digital signal reproduction apparatus of Fig. 1,

Fig. 3 is a schematic diagram showing a digital signal reproduction apparatus to which the present invention is applied,

Fig. 4 is a schematic diagram of a data detecting circuit of a conventional digital signal reproduction apparatus,

Fig. 5 is a timing chart showing wave forms of respective signals outputted from the circuits of the data detecting circuit of Fig. 4.

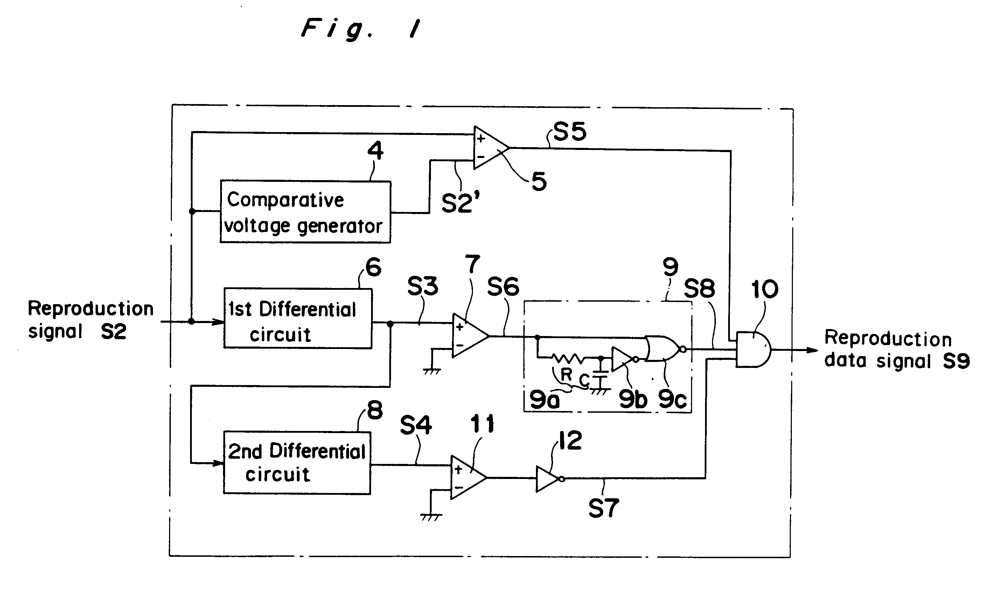

An embodiment of the present invention will be described with reference to Figs. 1 to 3.

In Fig. 3, an optical reading head 1 reads out data recorded on a magneto-optical disc 2 and outputs a reproduction signal S2 to a data detecting circuit 3.

Fig. 1 is a schematic diagram of the data detecting circuit 3. The reproduction signal S2 is input respectively to input terminals of a comparative voltage generating circuit 4, a differential circuit 6, and a non-inverted input terminal of a comparator 5.

The differential circuit 6 differentiates the reproduction signal and outputs a first order differential signal S3 respectively to a non-inverted input terminal of a comparator 7 and an input terminal of another differential circuit 8. The inverted input terminal of the comparator 7 is connected to ground. The comparator 7 compares the first order differential signal S3 with a zero voltage level to output a differential digital signal S6 to an input terminal of a trailing edge detecting circuit 9. The trailing edge detecting circuit 9 comprises a time constant circuit 9a having a resistor R and a capacitor C, an inverter 9b, and a NOR gate 9c. In the trailing edge detecting circuit 9, the differential digital signal S6 is delayed by the time constant circuit 9a, inverted by the inverter 9b. The inverted signal is then input to the input terminal of the NOR gate 9c. The differential digital signal S6 is input directly to another input terminal of NOR gate 9c. The NOR gate 9c outputs a peak detecting signal S8 representing the trailing edge of each pulse of the differential digital signal S6 to an input terminal of an AND gate 10. The composition of the trailing edge detecting circuit 9 is substantially the same as conventional trailing edge detecting circuits.

The comparative voltage generating circuit 4 comprises a low pass filter or an envelope detector and generates a comparative voltage S2' based on the reproduction signal S2. The comparative voltage S2' represents a threshold voltage for determining that the reproduction signal S2 is not close to its minimum level.

As an alternative, the comparative voltage generating circuit 4 may be constructed to output a constant voltage signal from a constant voltage source independently of the reproduction signal S2.

The output signal S2' from the comparative voltage generating circuit 4 is input into the inverted input terminal of the comparator 5. The comparator 5 compares the reproduction signal S2 with the comparative voltage S2' and outputs a first window digital signal S5. This is then input to the second input terminal of the AND gate 10. The first window signal S5 is used to remove noise from the peak detecting signal S8 by masking voltages close to the minimum of the reproduction signal. Since the first window signal S5 masks only signals in the vicinity of the minimum voltage of the reproduction signal S2, the comparative voltage S2' can be set to provide a relatively large level margin. The comparative voltage generating circuit 4 and the comparator 5 can then output accurately the first window signal S5 pulses to open the AND gate 10 unaffected by amplitude fluctuation, low frequency components or drop-out.

Another differential circuit 8 differentiates the first order differential signal S3 and provides a second order differential signal S4 to a non-inverted input terminal of a comparator 11. An inverted input terminal of the comparator 11 is connected to ground. The comparator 11 compares the second order differential signal S4 with a zero voltage in order to output a digital signal S7 to the third input terminal of the AND gate 10 through an inverter 12. As an alternative, it is possible to hold the inverted input terminal of the comparator 11 at a relatively small negative voltage and to compare the second order differential signal S4 with the small negative voltage. The inverter 12 outputs an inverted signal of the output of the comparator 11 as a second window signal. When a relatively small negative voltage is used as the comparative voltage of the comparator 11, it becomes possible to remove noise generated at the zero-cross level of the first order differential signal S3 from the second window signal S7. The peak detecting signal S8 is gated with the first and second window signals by the AND gate 10. The AND gate 10 outputs the reproduction data signal S9.

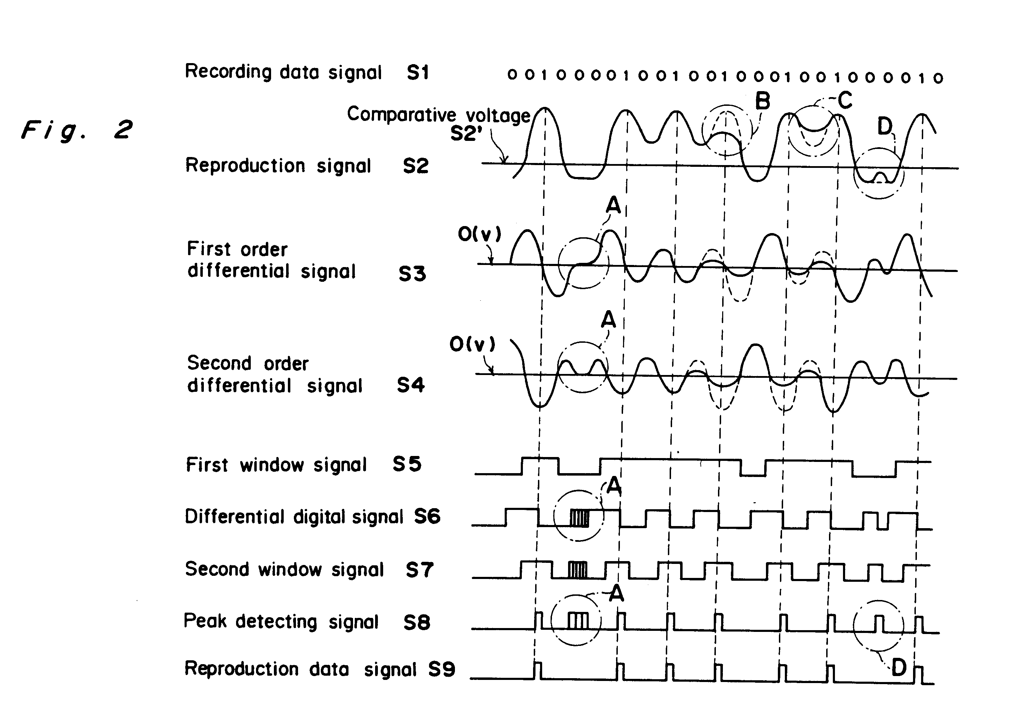

Operation of the data detecting circuit 3 will be described with reference to Fig. 2.

If the data signal S1 having "0" and "1" has been recorded on the magnetic thin film of the magneto-optical disc 2, the reproduction signal S2 is output as a wave form having peaks corresponding to "1's" and troughs corresponding to "0's". The differentiating circuit 6 differentiates the reproduction signal S2 and outputs the first order differential signal S3. The first order differential signal S3 has a wave form having zero-crossing points corresponding to maxima and minima of the reproduction signal S2. The first order differential signal S3 is compared with the 0 V level by the comparator 7, and a differential signal S6 is output. The trailing edge of each pulse of the differential digital signal S6 corresponds to a zero-crossing point travelling from positive to negative of the first order differential signal S3. Accordingly, this corresponds to a maxima of the reproduction signal S2. Namely, the trailing edge of each pulse of the differential digital signal S6 corresponds to a "1" of the recorded data signal S1. A peak detecting signal S8 can, therefore, obtain a pulse corresponding to "1" by detecting trailing edges of the differential digital signal S6 with the trailing edge detecting circuit 9. It should, however, be noted that the peak detecting signal S8 includes noise created by unstable portions of the first order differential signal as indicated by a circle A in Fig. 2 and/or by errors due to drop-out of the reproduction signal S2 such as those indicated by a circle D in Fig. 2. This noise and such errors can be eliminated as explained below.

The reproduction signal S2 is compared with the comparative voltage S2' by the comparator 5 to generate the first window signal S5. Since the comparative voltage S2' is set at a voltage slightly larger than the minimum of the reproduction signal S2, a relatively large level margin can be set. Therefore, although drop-outs in the reproduction signal S2 such as those indicated by the circles B and C, the pulses of the reproduction data signal S9 can be accurately output by opening the window gate 10 without being affected by the drop-outs. Further, at the minima of the reproduction signal S2 where noise is likely to be generated in the peak detecting signal S8 and at a maxima lower than expected due to drop-out of the reproduction signal S2 wherein a detecting error may be caused in the peak detecting signal S9, the gate 10 is shut.

However, it should be noted that error detection is not always avoided by using the first window signal S5 without utilising the second order differential signal as there is still a possibility that with just the one window signal, the window will be kept in an open state as a result of the wave form of the reproduction signal S2 taking a high level for a long period as when "0's" and "1's" are repeated alternatively in the recorded data signal S1. This problem is solved by utilizing the second order differential signal according to the present invention.

As stated above, the first order differential signal S3 is differentiated by the differential circuit 8. As the second order differential signal S4 has a wave form showing only changes in the amplitude of the first order differential signal S3, the second order differential signal S4 is not substantially effected by the amplitude fluctuation and the low frequency components in the reproduction signal S2. The second differential signal S4 is compared with a zero level voltage by the comparator 11, is inverted by the invertor 12, and output as the second window signal S7. The output of the comparator 11 is a signal that indicates the vicinity of the zero-crossing point when the first order differential signal varies from positive to negative. This corresponds to maxima of the reproduction signal S2. If the comparative voltage of the comparator 11 is set at a slightly small negative voltage, noise in the second window signal S7 such as that as shown in the circle A, can be removed in advance. As is apparent from the above, the second window signal S7 is not effected by amplitude fluctuations or low frequency components. The correct pulse corresponding to maxima of the reproduction signal S2 is output to open the window gate 10 even if drop-outs are caused in the reproduction signal S2 as indicated by circles B and C. However, when peaks of the reproduction signal S2 are reduced due to drop-out, the window is opened by the second window signal S7. In this case, a possible error in detecting the peak detecting signal S8 is avoided by the first window signal S5. Further, since the comparative voltage of the comparator 11 is set at the zero voltage level in the construction of Fig. 1, noise such as that as shown in the circle A may be generated in the second window signal S7 as well as in the peak detecting signal S8, however, the noise will be removed by the first window signal S5.

The peak detecting signal S8 is gated by the AND gate 10 in accordance with the first window signal S5 and the second window signal S7. The AND gate 10 outputs the reproduction data signal S9.

Since the data detecting circuit 3 can gate the peak detecting signal S8 with both the first and the second window signals, the detecting error of the peak point due to noise and/or drop-outs can be reliably avoided and the reproduction data signal S9 obtained unaffected by amplitude fluctuations, low frequency components and drop-out in reproduction signal.

## Claims

1. A digital signal reproduction apparatus for reproducing a digital data signal (S9) in response to a reproduction signal (S2) reproduced from a recording medium, comprising a comparative voltage generator (4) for generating a threshold voltage (S2'), first comparing means (5) for comparing the reproduction signal (S2) with the threshold voltage (S2') and outputting a first window signal (S5) representing the comparison result thereof, first differential means (6) for differentiating the reproduction signal (S2), and outputting a first order differential signal (S3), and peak detecting means (6, 7, 9) for detecting a zero-crossing point of the first order differential signal (S3), and outputting a peak detecting signal (S8), **characterised in that** the comparative voltage generator (4) is operable to generate said threshold voltage (S2') on the basis of the reproduction signal (S2) as to have a level set to be slightly higher than the minimum level of the reproduction signal (S2) **and in that** the digital signal reproduction apparatus further comprises:

    second order differential means (8) for differentiating the first order differential signal (S3) and outputting a second order differential signal (S4);

    second comparing means (11) for comparing the second order differential signal (S4) with a predetermined level and outputting a second window signal (S7) representing the comparison result thereof; and

    gate means (10) for gating the peak detecting signal (S8) with the first and second window signals (S5, S7), and outputting the reproduction digital data signal.

2. The digital signal reproduction apparatus claimed in claim 1, wherein the peak detecting means (6, 7, 9) comprises a comparator (7) for comparing the first order differential signal (S3) with a zero level and a trailing edge detecting circuit (9) for detecting each trailing edge of the output of the comparator.

3. The digital signal reproduction apparatus claimed in claim 2, wherein the trailing edge detecting circuit (9) comprises a time constant circuit (9a) for delaying the signal (S6) outputted from the comparator (7), an inverter (9b) for inverting the delayed signal, and a NOR gate (9c) for gating the delayed signal with the inverted signal to output a trailing peak detecting signal (S8).

4. A digital signal reproduction apparatus according to any one of claims 1 to 3 wherein the comparative voltage generator comprises a low pass filter.

5. A digital signal reproduction apparatus according to any one of claims 1 to 3, wherein the comparative voltage generator comprises an envelope detector.

6. A digital signal reproduction apparatus according to any one of the preceding claims wherein the predetermined level is a relatively small negative voltage.

## Revendications

1. Appareil de reproduction d'un signal numérique destiné à reproduire un signal de donnée numérique (S9) en réponse à un signal de reproduction (S2) reproduit à partir d'un support d'enregistrement, comportant un générateur de tension comparative (4) destiné à générer une tension de seuil (S2'), des premiers moyens comparateurs (5) destinés à comparer le signal de reproduction (S2) avec la tension de seuil (S2') et à émettre en sortie un premier signal de fenêtre (S5) représentant le résultat de la comparaison de ceux-ci, des premiers moyens différentiels (6) destinés à différencier le signal de reproduction (S2), et à émettre en sortie un signal différentiel de premier ordre (S3), et des moyens détecteurs de crête (6, 7, 9) destinés à détecter un point de passage par zéro du signal différentiel de premier ordre (S3), et à émettre en sortie un signal de détec-

tion de crête (S8), <u>caractérisé en ce que le</u> <u>générateur de tension comparative (4)</u> est apte à opérer pour générer ladite tension de seuil (S2') sur la base du signal de reproduction (S2) afin qu'elle ait un niveau défini pour être légèrement supérieur au niveau minimum du signal de reproduction (S2), <u>et en ce que l'ap-</u> pareil de reproduction d'un <u>signal numérique</u> comporte également :

des moyens différentiels de second ordre (8) destinés à différencier le signal différentiel de premier ordre (S3) et à émettre en sortie un signal différentiel de second ordre (S4);

des seconds moyens comparateurs (11) destinés à comparer le signal différentiel de second ordre (S4) avec un niveau prédéterminé et a émettre en sortie un second signal de fenêtre (S7) représentant le résultat de la comparaison de ceux-ci; et

des moyens formant porte (10) destinés à transmettre par porte le signal de détection de crête (S8) avec les premier et second signaux de fenêtre (S5, S7), et à émettre en sortie le signal de donnée numérique de reproduction.

2. Appareil de reproduction d'un signal numérique selon la revendication 1, dans lequel les moyens détecteurs de crête (6, 7, 9) comportent un comparateur (7) destiné a comparer le signal différentiel de premier ordre (S3) avec un niveau zéro et un circuit détecteur de flanc arrière (9) destiné à détecter chaque flanc arrière de la sortie du comparateur.

3. Appareil de reproduction d'un signal numérique selon la revendication 2, dans lequel le circuit détecteur de flanc arrière (9) comporte un circuit à constante de temps (9a) destiné à retarder le signal (S5) émis en sortie à partir du comparateur (7), un inverseur (9b) destiné à inverser le signal retardé, et une porte NI (9c) destinée à transmettre par porte le signal retardé avec le signal inversé pour émettre en sortie un signal de détection de crête arrière (S8).

4. Appareil de reproduction d'un signal numérique selon l'une quelconque des revendications 1 à 3, dans lequel le générateur de tension comparative comporte un filtre passe-bas.

5. Appareil de reproduction d'un signal numérique selon l'une quelconque des revendications 1 à 3, dans lequel le générateur de tension comparative comporte un détecteur d'enveloppe.

6. Appareil de reproduction d'un signal numérique selon l'une quelconque des revendications précédentes, dans lequel le niveau prédéterminé est une tension négative relativement faible.

## Patentansprüche

1. Einrichtung zur Wiedergabe von Digitalsignalen (S9) in Abhängigkeit eines von einem Aufzeichnungsmedium abgreifbaren Reproduktionssignals (S2) mit einem Vergleichsspannungsgenerator (4), der eine Schwellenspannung (S2') liefert, einer ersten Vergleichseinrichtung (5), die das Reproduktionssignal (S2) gegen die Schwellenspannung (S2') vergleicht und ein dem Vergleichsergebnis entsprechendes erstes Fenstersignal (S5) ausgibt, einer ersten Differenziereinrichtung (6), die das Reproduktionssignal (S2) differenziert und ein Differenzsignal (S3) erster Ordnung ausgibt, einer Spitzenwert-Abtasteinrichtung (6, 7, 9) zum Ermitteln eines Nulldurchgangs beim Differenzsignal (S3) erster Ordnung sowie zur Ausgabe eines Spitzenwert-Abtastsignals (S8), **dadurch gekennzeichnet,** daß der Vergleichsspannungsgenerator (4) die Schwellenspannung (S2') auf der Grundlage des Reproduktionssignals (S2) auf einen Pegel einstellt, der etwas über dem Minimumpegel des Reproduktionssignals (S2) liegt, und weiterhin dadurch gekennzeichnet, daß die Digitalsignal-Wiedergabeeinrichtung folgende Baugruppen aufweist:

eine zweite Differenziereinrichtung (8), die das Differenzsignal (S3) erster Ordnung differenziert und ein Differenzsignal (S4) zweiter Ordnung abgibt;

eine zweite Vergleichseinrichtung (11), welche das Differenzsignal (S4) zweiter Ordnung mit einem festgelegten Wert vergleicht und ein dem Vergleichsergebnis entsprechendes zweites Fenstersignal (S7) liefert; sowie

eine Torschaltung (10) zum Verknüpfen des Spitzenwert-Abtastsignals (S8) mit dem ersten und zweiten Fenstersignal (S5, S7) sowie zum Ausgeben des reproduzierten Digitaldatensignals.

2. Digitalsignal-Wiedergabeeinrichtung nach Anspruch 1, bei welcher die Spitzenwert-Abtasteinrichtung (6, 7, 9) einen Komparator (7) aufweist, der das Differenzsignal (S3) erster Ordnung gegen einen Nullpegel vergleicht, und bei der eine Vorderflanken-Abtastschaltung (9) vorhanden ist, die jede Vorderflanke im Ausgangssignal des Komparators detektiert.

3. Digitalsignal-Wiedergabeeinrichtung nach Anspruch 2, bei der die Vorderflanken-Abtastschaltung (9) einen Zeitkonstantenkreis (9a) aufweist, der das vom Komparator (7) abgegebene Signal (S6) verzögert, und bei der weiterhin ein Inverter (9b) zum Invertieren des verzögerten Signals sowie ein NOR-Glied (9c) vorhanden ist, welches das verzögerte Signal mit dem invertierten Signal verknüpft und ausgangsseitig ein Vorderflankenspitzenwert-Abtastsignal (S8) abgibt.

4. Digitalsignal-Wiedergabeeinrichtung nach einem der Ansprüche 1 bis 3, bei der der Vergleichsspannungsgenerator ein Tiefpaßfilter aufweist.

5. Digitalsignal-Wiedergabeeinrichtung nach einem der Ansprüche 1 bis 3, bei der der Vergleichsspannungsgenerator einen Hüllkurvendetektor aufweist.

6. Digitalsignal-Wiedergabeeinrichtung nach einem der vorstehenden Ansprüche, bei welcher der Vorgabepegel ein relativ kleiner negativer Spannungswert ist.

EP 0 312 214 B1

# Fig. 1

Comparative voltage generator — 4

S2'

S5

5

Reproduction signal S2

1st Differential circuit — 6

S3

7

S6

9

S8

10

9a  R  C  9b  9c

Reproduction data signal S9

2nd Differential circuit — 8

S4

11

I2

S7

Fig. 2

Recording data signal  S1    0 0 1 0 0 0 0 1 0 0 1 0 0 1 0 0 0 1 0 0 1 0 0 0 0 1 0

Comparative voltage S2'
Reproduction signal  S2

First order differential signal  S3

Second order differential signal  S4

First window signal  S5

Differential digital signal  S6

Second window signal  S7

Peak detecting signal  S8

Reproduction data signal  S9

EP 0 312 214 B1

# Fig. 3

Optical head **1**

Data detecting circuit **3**

Reproduction signal

Reproduction data signal

**2**

Recording data signal

Fig. 4   PRIOR ART

Reproduction signal **S12**

Comparative voltage generator   22

Differential circuit   21

S16

S12'

23

24

25

26

S13

S15

S17

Reproduction data signal **S18**

3

EP 0 312 214 B1

## Fig. 5    PRIOR ART

Recording data signal  S11        0 0 1 0 0 0 0 1 0 0 1 0 0 1 0 0 0 1 0 0 1 0 0

Comparative  voltage S12'                                    F

Reproduction signal S12

Differential  signal  S13        O(v)        E

Window signal  S16                          F

Differential digital signal  S15        E

Peak  detecting  signal  S17        E

Reproduction data signal  S18        F

EP 0 312 214 B1